# EUROPÄISCHE PATENTSCHRIFT

(11) **EP 1 529 661 B1**
(45) Veröffentlichungstag und Bekanntmachung des Hinweises auf die Patenterteilung: **29.11.2006**
(21) Anmeldenummer: 04104618.6
(22) Anmeldetag: 23.09.2004
(51) Int. Cl.: B60C 11/12

(54) **Fahrzeugluftreifen**
Pneumatic tires for vehicles
Bandage pneumatique pour véhicules

(30) Priorität: 04.11.2003 DE 10352145
(43) Veröffentlichungstag der Anmeldung: 11.05.2005
(73) Patentinhaber: Continental Aktiengesellschaft, 30165 Hannover (DE)
(72) Erfinder: Diensthuber, Franz, 30167, Hannover (DE); Heine, Stefan, 30163, Hannover (DE)

(56) Entgegenhaltungen:
- EP-A- 0 718 125
- EP-A- 0 747 242
- DE-A- 19 753 819

## Beschreibung

Die Erfindung betrifft einen Fahrzeugluftreifen, insbesondere für den Einsatz unter winterlichen Fahrbedingungen, mit einem Laufstreifen, welcher durch Umfangsnuten, Quernuten, Rillen und dergleichen gebildete und strukturierte Profilpositive aufweist, welche mit einer Anzahl von parallel zueinander und zumindest im Wesentlichen in Profilquerrichtung verlaufenden Haupteinschnitten versehen sind. Ein solcher Fahrzeugluftreifen, dem Oberbegriff des Anspruchs 1 entsprechend, ist aus der DE 197 53 819 A bekannt.

Fahrzeugluftreifen mit Laufstreifen, deren Profilpositive eine Vielzahl von Einschnitten aufweisen, sind in unterschiedlichen Ausführungen bekannt. Die EP 0 669 216 B1 offenbart einen PKW-Winterreifen mit einem bezüglich der Äquatorebene asymmetrisch gestalteten Laufstreifenprofil, welches, bezogen auf das Fahrzeug, einen Laufstreifeninnen- und einen Laufstreifenaußenbereich aufweist. In der Schulterblockreihe im Laufstreifeninnenbereich sind sägezahnförmige Einschnitte, in der Schulterblockreihe im Laufstreifenaußenbereich sind wellen- oder zick-zack-förmige Einschnitte vorgesehen. Bei dem aus der EP 0 618 092 B1 bekannten Fahrzeugreifen sind in den Profilpositiven die Einschnitte derart angeordnet, dass sie Profilelemente bilden, die zumindest annähernd eine Doppel-T-Träger-förmige Gestalt aufweisen. Die bei dem Reifen gemäß der EP 0 618 091 B1 vorgesehenen Einschnitte verlaufen von einem einschnittfreien Zentralbereich ausgehend strahlenförmig zu den Profilblockkanten.

Bei der Anordnung und Ausführung von Einschnitten in PKW - Winterreifen steht es im Vordergrund, die Griffeigenschaften des Reifens unter winterlichen Fahrbedingungen sicherzustellen und gleichzeitig ein gutes Fahrverhalten und gute Handlingeigenschaften auf trockenen und nassen Fahrbahnen zu gewährleisten. Bei Reifen mit bekannten Einschnittausführungen und -anordnungen sind nach wie vor die Seitenführungseigenschaften auf winterlichen und nassen Fahrbahnen verbesserungswürdig.

Hier setzt nun die Erfindung ein, deren Aufgabe darin besteht, durch die Einschnittausgestaltung und -anordnung gezielt die Seitenführungseigenschaften des Reifens auf winterlichen und nassen Fahrbahnen zu verbessern und gleichzeitig die Handlingeigenschaften auf hohem Niveau zu halten.

Gelöst wird die gestellte Aufgabe erfindungsgemäß dadurch, dass in Profilpositiven zumindest zwei einander benachbarte Haupteinschnitte vorgesehen sind, welche mit mindestens zwei wechselseitig in die eine und in die andere Umfangsrichtung weisenden Nebeneinschnitten versehen sind, die keine Verbindung zu anderen Einschnitten aufweisen, wobei die benachbarten Haupteinschnitte bezüglich der Orientierungsrichtung der abzweigenden Nebeneinschnitte übereinstimmend ausgeführt sind.

Durch die Haupteinschnitte mit wechselseitig versetzt angeordneten und zumindest im Wesentlichen in Umfangsrichtung verlaufenden Nebeneinschnitten können die Seitenführungseigenschaften des Reifens deutlich verbessert werden ohne die Profilsteifigkeit zu vermindern und die Handlingeigenschaften zu beeinträchtigen.

Bei einer bevorzugten Ausführungsform der Erfindung sind die Haupteinschnitte in Profilquerrichtung derart gegeneinander versetzt, dass mäanderförmig verlaufende Profilpositivbereiche gebildet werden. Bei dieser Ausführung ergeben sich selbstversteifende Profilbereiche, welche sich sehr günstig auf die Handlingeigenschaften des Reifens auswirken.

Um die Profil positive möglichst gleichmäßig zu versteifen, ist es von Vorteil, wenn innerhalb eines Profilpositivs die von den Haupteinschnitten abzweigenden Nebeneinschnitte bezüglich der Umfangsrichtung übereinstimmende Positionen und Erstreckungsrichtungen aufweisen.

Ein gleichmäßiger Laufstreifenabrieb wird dadurch begünstigt, dass die Nebeneinschnitte unter einem Winkel von 80° bis 100° von den Haupteinschnitten abzweigen.

Für eine Vergleichmäßigung der Biegesteifigkeit der Profilpositive ist es ferner von Vorteil, wenn die Nebeneinschnitte eine Länge bzw. Erstreckung ausweisen, die 45% bis 55% des Normalabstandes der einander benachbarten Haupteinschnitte beträgt und wenn der gegenseitige Abstand der Nebeneinschnitte mindestens dem Normalabstand der Haupteinschnitte beträgt.

Weitere Merkmale, Vorteile und Einzelheiten der Erfindung werden anhand der Zeichnung, die ein Ausführungsbeispiel darstellt, näher beschrieben. Dabei zeigen
Fig. 1 eine Draufsicht auf einen Abschnitt einer Teilabwicklung eines erfindungsgemäß ausgeführten Laufstreifens eines Fahrzeugluftreifens und
Fig. 2 eine Detail aus Fig. 1.

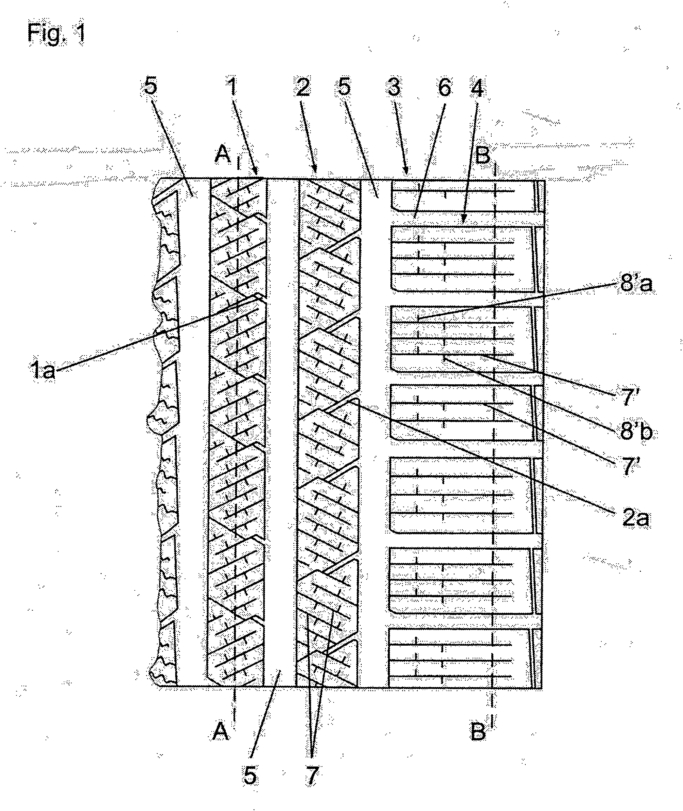

Fig. 1 zeigt eine Draufsicht auf einen Laufstreifen, welcher im gezeigten Bereich drei gerade in Umfangsrichtung umlaufende, breite Umfangsnuten 5 aufweist, welche zwei Laufstreifenbänder 1, 2 und eine Blockreihe 3 begrenzen. Entlang der Äquatorlinie A-A des Reifens ist ein zentrales Laufstreifenband 1 vorgesehen, an welches das weitere Laufstreifenband 2 und schulterseitig die Blockreihe 3 anschließen. Im Bereich der Schulterblockreihe 3 verdeutlicht die Linie R-R den einen seitlichen Rand der sogenannten Aufstandsbreite, das ist die Breite jenes Bereiches des Laufstreifens, mit welchem der Reifen beim Abrollen mit dem Untergrund in Kontakt kommt. Quernuten 6, die bei der dargestellten Ausführungsform in Reifenquerrichtung verlaufen, bewirken eine Gliederung der Blockreihe 3 in Blöcke 4. Die beiden Laufstreifenbänder 1, 2 sind mit Sacknuten 1a, 2a versehen, die gegensinnig zueinander unter einem spitzen bzw. stumpfen Winkel zur Umfangsrichtung (Line A-A) verlaufen.

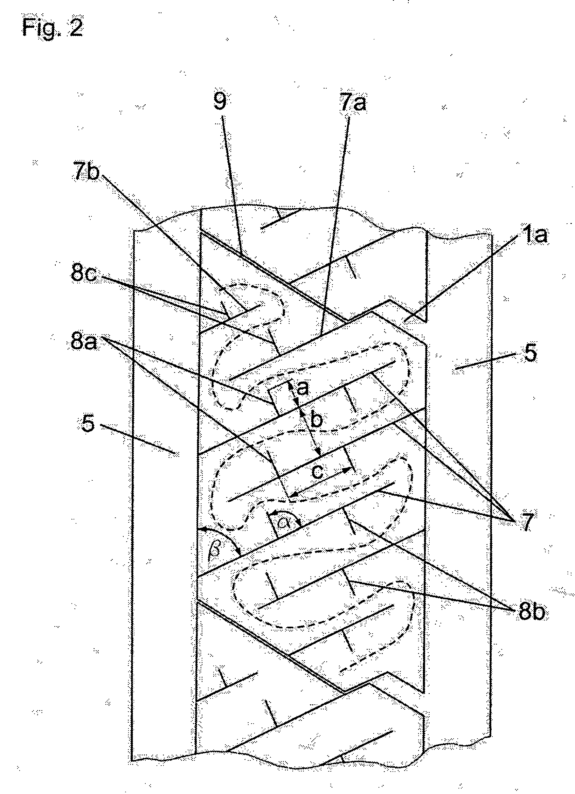

Die Laufstreifenbänder 1, 2 und die Blöcke 4 der Schulterblockreihe 3 sind mit besonders gestalteten Einschnitten versehen, welche im Folgenden anhand der Fig. 2, welche in einer vergrößerten Darstellung eine Draufsicht auf ein Detail des Laufstreifenbandes 1 zeigt, näher beschrieben werden. Von den das Laufstreifenband 1 begrenzenden Umfangsnuten 5 gehen geradlinige, zueinander parallel und gegenüber der Umfangrichtung unter einem Winkel β von etwa 60 ° verlaufende Haupteinschnitte 7 aus. Die Haupteinschnitte 7 sind im Wesentlichen in Reifenquerrichtung orientiert, sodass der Winkel β mindestens 45°, insbesondere mindestens 55°, gewählt wird. Zwischen zwei in Umfangsrichtung benachbarten Sacknuten 1a sind zumindest zwei, gemäß Fig. 2 vier erfindungsgemäß ausgeführte Haupteinschnitte 7 vorgesehen. Die gegenseitige Anordnung der Haupteinschnitte 7 ist derart, dass sie abwechselnd von der einen und der anderen Umfangsnut 5 ausgehen und in einem Abstand von 5% bis 20% der Breite des Laufstreifenbandes 1 vor der zweiten Umfangsnut 5 enden.

Von jedem Haupteinschnitt 7 zweigen zwei geradlinige Nebeneinschnitte 8a, 8b ab. Der eine Nebeneinschnitt 8a weist in die eine Umfangrichtung, der andere Nebeneinschnitt 8b in die andere Umfangsrichtung. Der Winkel α zwischen dem Einschnitt 7 und den Nebeneinschnitten 8a, 8b ist bevorzugt ein rechter Winkel, insbesondere wird er in der Größenordnung zwischen 80° und 100° gewählt. Bei sämtlichen vier Haupteinschnitten 7 zweigen die Nebeneinschnitte 8a und die Nebeneinschnitte 8b in übereinstimmende Richtungen und unter übereinstimmenden Winkeln von den Haupteinschnitten 7 ab. Sowohl die Anfangsals auch die Endpunkte sämtlicher Nebeneinschnitte 8a, 8b liegen bei der dargestellten Ausführung auf Linien, die parallel zur Äquatorlinie A-A verlaufen. Bei der gezeigten Ausführungsform sind ferner sämtliche Nebeneinschnitte 8a und 8b gleich lang ausgeführt. Die Länge a der Nebeneinschnitte 8a, 8b beträgt vorzugsweise zwischen 45% und 55% des Normalabstandes b der benachbarten Haupteinschnitte 7. Die beiden Nebeneinschnitte 8a, 8b eines Haupteinschnittes 7 haben einen gegenseitigen Abstand c, der mindestens dem Abstand b entspricht, vorzugsweise jedoch größer als b ist. Die Nebeneinschnitte 8a, 8b weisen ferner zu den beiden Umfangsnuten 5 gleich große Abstände auf.

An den Enden der Sacknuten 1a sind zu den Haupteinschnitten 7 parallel verlaufende weitere Einschnitte 7a angesetzt, von welchen, parallel zu den Sacknuten 1a, in Richtung Umfangsnut 5 verlaufende Einschnitte 9 ausgehen, die breiter sind als die Einschnitte 7 und auch durch Nuten ersetzt werden können. Weitere kurze Einschnitte 7b sind parallel zu den Einschnitten 7a vorgesehen. Die Einschnitte 7a, 7b sind in Übereinstimmung mit der Orientierung und Anordnung der Nebeneinschnitte 8a, 8b mit je einem Nebeneinschnitt 8c versehen. Anordnung und Ausführung der Nebeneinschnitte 8c sind an die Nebeneinschnitte 8a, 8b entsprechend angepasst.

Durch die wechselseitig versetzte Anordnung der Nebeneinschnitte 8a, 8b und die wechselseitige Verbindung der Haupteinschnitte 7 mit den beiden Umfangnuten 5 entsteht im Laufstreifenband 1 zwischen benachbarten Sacknuten 1a ein zusammenhängender quasi mäanderförmig verlaufender Profilbereich, welcher in Fig. 2 durch eine strichlierte Linie angedeutet ist. Das Laufstreifenband 1 ist daher auf eine besonders vorteilhafte Weise versteift. Die in Umfangsrichtung verlaufenden Nebeneinschnitte 8a, 8b, 8c verbessern deutlich die Seitenführung auf winterlichen und nassen Fahrbahnen, gemeinsam mit den Haupteinschnitten 7 und den weiteren Einschnitten 7a, 7b gewährleisten sie sehr gute Griffeigenschaften.

Die Breite sämtlicher Einschnitte 7, 7a, 7b, 8a, 8b, 8c beträgt zwischen 0,4 und 0,7 mm, ihre Tiefe beträgt bei neuem Reifen mindestens 1,5 mm und reicht vorzugsweise bis auf die Dessintiefe, die zwischen 7 und 9 mm gewählt wird.

Die im Laufstreifenband 2 vorgesehenen Einschnitte sind analog zu jenen im Band 1 ausgeführt und angeordnet.

Auch in den Schulterblöcken 4 sind erfindungsgemäß ausgeführte Einschnitte vorgesehen. Jeder Schulterblock 4 weist entweder zwei oder drei parallel zu den Quernuten 6 verlaufende und von der Umfangsnut 5 ausgehende Haupteinschnitte 7' auf, welche mit Nebeneinschnitten 8'a, 8'b versehen sind, die von den Haupteinschnitten 7' wechselseitig in die eine und in die andere Umfangsrichtung abzweigen. Die Umfangslänge der Nebeneinschnitte 8'a, 8'b beträgt ebenfalls zwischen 45% und 55% des Normalabstandes der Haupteinschnitte 7'. Die Einschnitte 7' können auch derart im jeweiligen Block 4 angeordnet werden, dass abwechselnd ein Einschnitt 7' in die Umfangsnut 5 einmündet und der andere bereits vor der Umfangsnut 5 endet, sodass auch in den Schulterblöcken 4 die bereits beschriebene Mäanderstruktur gegeben ist.

Die Erfindung ist auf das dargestellte Ausführungsbeispiel nicht eingeschränkt. So ist es vor allem möglich, anstelle von Laufstreifenbändern Blockreihen mit Blöcken mit erfindungsgemäß ausgeführten Einschnitten vorzusehen. Was die sonstigen, nicht gezeigten Bereiche des Laufstreifenprofils betrifft, können diese ebenfalls mit erfindungsgemäß ausgeführten Einschnitten versehen oder beliebig anders gestaltet sein. Die Haupt- und Nebeneinschnitte sind bevorzugt geradlinig verlaufende Einschnitte, können aber auch einen leicht gebogenen oder leicht wellenförmigen Verlauf aufweisen. Von besonderem Vorteil ist es, Profilpositive, beispielsweise Blockreihen, mit erfindungsgemäß ausgeführten Einschnitten im, bezogen auf das Fahrzeug, fahrzeuginnenseitig gelegenen Laufstreifenbereich vorzusehen.

## Patentansprüche

1. Fahrzeugluftreifen, insbesondere für den Einsatz unter winterlichen Fahrbedingungen, mit einem Laufstreifen, welcher durch Umfangsnuten, Quernuten, Rillen und dergleichen gebildete und strukturierte Profilpositive aufweist, welche mit einer Anzahl von parallel zueinander und zumindest im Wesentlichen in Profilquerrichtung verlaufenden Haupteinschnitten versehen sind,
**dadurch gekennzeichnet,**
**dass** in Profilpositiven zumindest zwei einander benachbarte Haupteinschnitte (7, 7') vorgesehen sind, welche mit mindestens zwei wechselseitig in die eine und die andere Umfangsrichtung weisenden Nebeneinschnitten (8a, 8b, 8'a, 8'b) versehen sind, die keine Verbindung zu anderen Einschnitten aufweisen, wobei die benachbarten Haupteinschnitte (7, 7') bezüglich der Orientierungsrichtung der abzweigenden Nebeneinschnitte (8a, 8b, 8'a, 8'b) übereinstimmend ausgeführt sind.

2. Fahrzeugluftreifen nach Anspruch 1, **dadurch gekennzeichnet, dass** die Haupteinschnitte (7, 7') in Profilquerrichtung derart gegeneinander versetzt sind, dass mäanderförmig verlaufende Profilpositivbereiche gebildet werden.

3. Fahrzeugluftreifen Anspruch 1 oder 2, **dadurch gekennzeichnet, dass** innerhalb eines Profilpositivs die von den Haupteinschnitten (7, 7') abzweigenden Nebeneinschnitte (8a, 8b, 8'a, 8'b) bezüglich der Umfangsrichtung übereinstimmende Positionen und Erstreckungsrichtungen aufweisen.

4. Fahrzeugluftreifen nach einem der Ansprüche 1 bis 3, **dadurch gekennzeichnet, dass** die Nebeneinschnitte (8a, 8b, 8'a, 8'b) unter einem Winkel von 80° bis 100° von den Haupteinschnitten (7, 7') abzweigen.

5. Fahrzeugluftreifen nach einem der Ansprüche 1 bis 4, **dadurch gekennzeichnet, dass** die Nebeneinschnitte (8a, 8b, 8'a, 8'b) eine Länge (a) bzw. Erstreckung aufweisen, die zwischen 45% und 55% des Normalabstandes (b) der einander benachbarten Haupteinschnitte (7, 7') beträgt.

6. Fahrzeugluftreifen nach einem der Ansprüche 1 bis 5, **dadurch gekennzeichnet, dass** die Nebeneinschnitte (8a, 8b, 8'a, 8'b) einen gegenseitigen Abstand (c) aufweisen, der mindesten dem Normalabstand (b) der einander benachbarten Haupteinschnitte (7, 7') beträgt.

7. Fahrzeugluftreifen nach einem der Ansprüche 1 bis 6, **dadurch gekennzeichnet, dass** die Haupt- und / oder die Nebeneinschnitte (8a, 8b, 8'a, 8'b) geradlinig verlaufen.

8. Fahrzeugluftreifen nach einem der Ansprüche 1 bis 7, **dadurch gekennzeichnet, dass** die Haupteinschnitte (7) mit ihrem einen Ende in eine Nut, Rille oder dergleichen einmünden.

## Claims

1. Pneumatic tyres for vehicles, in particular for use during winter driving conditions, with a tread which comprises structured positive profiles formed by circumferential grooves, transverse grooves, channels and the like, which profiles are provided with a number of large sipes extending parallel to one another and extending at least substantially in the transverse direction of the profile, **characterized in that** in the positive profiles at least two large sipes (7, 7') are provided adjacent to one another which are provided with at least two small sipes (8a, 8b, 8'a, 8'b) alternately in the one circumferential direction and in the other circumferential direction and which are not connected to other sipes, the adjacent large sipes (7, 7') being designed to correspond to the direction of orientation of the small sipes (8a, 8b, 8'a, 8'b) which branch off.

2. Pneumatic tyres for vehicles according to Claim 1, **characterized in that** the large sipes (7, 7') are offset to one another in the transverse direction of the profile and **in that** positive profile regions are formed, extending in a meandering manner.

3. Pneumatic tyres for vehicles according to Claim 1 or 2, **characterized in that** within a positive profile the small sipes (8a, 8b, 8'a, 8'b) branching off from the large sipes (7, 7') have positions and directions of extension corresponding to the circumferential direction.

4. Pneumatic tyres for vehicles according to any one of Claims 1 to 3, **characterized in that** the small sipes (8a, 8b, 8'a, 8'b) branch off at an angle of 80° to 100° from the large sipes (7, 7').

5. Pneumatic tyres for vehicles according to any one of Claims 1 to 4, **characterized in that** the small sipes (8a, 8b, 8'a, 8'b) have a length (a) and/or extension which is between 45% and 55% of the standard spacing (b) between the large sipes (7, 7') adjacent to one another.

6. Pneumatic tyres for vehicles according to any one of Claims 1 to 5, **characterized in that** the small sipes (8a, 8b, 8'a, 8'b) have a mutual spacing (c) which is at least the standard spacing (b) between the large sipes (7, 7') adjacent to one another.

7. Pneumatic tyres for vehicles according to any one of Claims 1 to 6, **characterized in that** the large and/or the small sipes (8a, 8b, 8'a, 8'b) extend in a rectilinear manner.

8. Pneumatic tyres for vehicles according to any one of Claims 1 to 7, **characterized in that** at one end the large sipes (7) lead into a groove, channel or the like.

## Revendications

1. Bandage pneumatique pour véhicule, notamment pour l'utilisation dans des conditions de conduite hivernales, comprenant une bande de roulement qui présente des profils positifs formés et structurés par des rainures périphériques, des rainures transversales, des gorges et similaires, qui sont pourvus d'une pluralité d'entailles principales s'étendant parallèlement les unes aux autres et au moins essentiellement dans la direction transversale des profils,
**caractérisé en ce que**
l'on prévoit dans les profils positifs au moins deux entailles principales voisines l'une de l'autre (7, 7'), qui sont pourvues d'au moins deux entailles secondaires (8a, 8b, 8'a, 8'b) tournées en alternance dans l'une et dans l'autre direction périphérique, lesquelles ne présentent aucune connexion aux autres entailles, les entailles principales voisines (7, 7') étant réalisées en coïncidence par rapport à la direction d'orientation des entailles secondaires qui en partent (8a, 8b, 8'a, 8'b).

2. Bandage pneumatique pour véhicule selon la revendication 1, **caractérisé en ce que** les entailles principales (7, 7') sont décalées dans la direction transversale des profils l'une par rapport à l'autre de telle sorte que des régions de profils positifs s'étendant en méandres soient formées.

3. Bandage pneumatique pour véhicule selon la revendication 1 ou 2, **caractérisé en ce que** les entailles secondaires (8a, 8b, 8'a, 8'b) partant des entailles principales (7, 7') à l'intérieur d'un profil positif présentent, par rapport à la direction périphérique, des positions et des directions d'étendue coïncidentes.

4. Bandage pneumatique pour véhicule selon l'une quelconque des revendications 1 à 3, **caractérisé en ce que** les entailles secondaires (8a, 8b, 8'a, 8'b) partent des entailles principales (7, 7') suivant un angle de 80° à 100°.

5. Bandage pneumatique pour véhicule selon l'une quelconque des revendications 1 à 4, **caractérisé en ce que** les entailles secondaires (8a, 8b, 8'a, 8'b) présentent une longueur (a) ou une étendue qui vaut entre 45% et 55% de la distance normale (b) entre les entailles principales voisines (7, 7').

6. Bandage pneumatique pour véhicule selon l'une quelconque des revendications 1 à 5, **caractérisé en ce que** les entailles secondaires (8a, 8b, 8'a, 8'b) présentent un écartement mutuel (c) qui vaut au moins la distance normale (b) entre les entailles principales voisines (7, 7').

7. Bandage pneumatique pour véhicule selon l'une quelconque des revendications 1 à 6, **caractérisé en ce que** les entailles principales et/ou les entailles secondaires (8a, 8b, 8'a, 8'b) s'étendent en ligne droite.

8. Bandage pneumatique pour véhicule selon l'une quelconque des revendications 1 à 7, **caractérisé en ce que** les entailles principales (7) débouchent avec l'une de leurs extrémités dans une rainure, gorge ou similaire.
